# EUROPÄISCHE PATENTSCHRIFT

(11) **EP 1 373 757 B1**
(45) Veröffentlichungstag und Bekanntmachung des Hinweises auf die Patenterteilung: **12.01.2005**
(21) Anmeldenummer: 02740437.5
(22) Anmeldetag: 27.03.2002
(51) Int. Cl.: F16H 3/66

(54) **MEHRSTUFENGETRIEBE**
MULTI-STAGE GEARBOX
TRANSMISSION A PLUSIEURS ETAGES

(30) Priorität: 30.03.2001 DE 10115985
(43) Veröffentlichungstag der Anmeldung: 02.01.2004
(73) Patentinhaber: ZF FRIEDRICHSHAFEN Aktiengesellschaft, 88038 Friedrichshafen (DE)
(72) Erfinder: BIERMANN, Eberhard, 88214 Ravensburg (DE)
(86) Internationale Anmeldenummer: PCT/EP2002/003438
(87) Internationale Veröffentlichungsnummer: WO 2002/079665

(56) Entgegenhaltungen:
- US-A- 2 890 603
- US-A- 4 774 856
- PATENT ABSTRACTS OF JAPAN vol. 011, no. 247 (M-615), 12. August 1987 (1987-08-12) & JP 62 056652 A (MAZDA MOTOR CORP), 12. März 1987 (1987-03-12)
- PATENT ABSTRACTS OF JAPAN vol. 017, no. 618 (M-1510), 15. November 1993 (1993-11-15) & JP 05 187489 A (JATCO CORP), 27. Juli 1993 (1993-07-27)
- PATENT ABSTRACTS OF JAPAN vol. 017, no. 618 (M-1510), 15. November 1993 (1993-11-15) & JP 05 187491 A (JATCO CORP), 27. Juli 1993 (1993-07-27)
- PATENT ABSTRACTS OF JAPAN vol. 017, no. 618 (M-1510), 15. November 1993 (1993-11-15) & JP 05 187492 A (JATCO CORP), 27. Juli 1993 (1993-07-27)

## Beschreibung

Die vorliegende Erfindung betrifft ein Mehrstufengetriebe mit einem Vorschaltsatz und einem Nachschaltsatz bei dem durch selektives Schalten von Schaltelemente mindestens sieben Vorwärtsgänge derart schaltbar sind, daß zum Umschalten von einem Gang in den Nächsten jeweils nur ein Schaltelement abgeschaltet und ein weiteres zugeschaltet wird.

In der WO Ø 127 496 (Stand der Technik nach Art. 54(3)EPÜ) der Anmelderin werden mehrere Getriebeschemata für ein automatisches Mehrstufengetriebe mit verschiedenen Kombinationen gekoppelter Planetenradsätze beschrieben. Durch geeignete Anbindung einer nichtschaltbaren Vorschaltradsatzkombination an eine schaltbare Nachschaltradsatzkombination können jeweils mindestens sieben Vorwärtsgänge ohne Gruppenschaltung geschaltet werden. Die Anzahl der schaltbaren Vorwärtsgänge ist dabei mindestens um zwei größer als die Anzahl der Schaltelemente. Vorschaltsatz und Nachschaltsatz sind dabei stets koaxial zueinander angeordnet.

Die WO Ø 127 496 schlägt dabei vor, die schaltbare Nachschaltradsatzkombination als Zweisteg-Vierwellen-Getriebe mit zwei schaltbaren Nachschalt-Planetenradsätzen auszubilden. Unter Zweisteg-Vierwellen-Getriebe ist hierbei eine Anordnung von zwei einzelnen mechanisch gekoppelten Einsteg-Planetenradsätzen zu verstehen, bei denen die gekoppelte Einheit infolge einer zweifachen Bauteilbindung vier sogenannte "freie Wellen" aufweist, wobei eine "Welle" ein Sonnenrad, ein Hohlrad oder auch ein Steg eines Planetenradsatzes sein kann.

Die Aufgabe der vorliegenden Erfindung besteht nun darin, ausgehend vom genannten Stand der Technik ein Mehrstufengetriebe mit nicht-koaxialer Anordnung von Antriebsund Abtriebswelle und wenigstens sieben ohne Gruppenschaltung schaltbaren Vorwärtsgängen hinsichtlich Bauraum weiterzuentwickeln, bei vergleichsweise geringem Bauaufwand, günstiger Gangstufung und großer Spreizung.

Diese Aufgabe wird durch ein die Merkmale des Anspruchs 1 bzw. des Anspruchs 10 aufweisendes Mehrstufengetriebe gelöst.

Ausgehend vom Stand der Technik der WO Ø 127 496 weist das Mehrstufengetriebe einen mit der Antriebswelle des Getriebes verbundenen Vorschaltsatz und einen mit der Abtriebswelle des Getriebes verbundenen Nachschaltsatz, sowie mehrere Schaltelemente auf.

Der Vorschaltsatz ist dabei vorzugsweise als Zweisteg-Vierwellengetriebe ausgebildet mit zwei gekoppelten, schaltbaren Vorschalt-Planetenradsätzen oder mit zwei gekoppelten, nicht schaltbaren Vorschalt-Planetenradsätzen oder mit zwei voneinander unabhängigen Vorschalt-Planetenradsätzen, von denen einer schaltbar und der andere nicht schaltbar ist. Unter "unabhängig" ist dabei zu verstehen, daß aus jedem der beiden Vorschalt-Planetenradsätze je eine Drehzahl erzeugt wird, die nicht durch eine Wirkverbindung zwischen beiden Vorschalt-Planetenradsätzen beeinflußt wird. Die Ausgangsdrehzahl des Vorschaltsatzes wird hier also entweder durch den ersten oder durch den zweiten Vorschalt-Planetenradsatz erzeugt, nicht jedoch durch beide gleichzeitig.

Der Nachschaltsatz ist vorzugsweise als Zweisteg-Vierwellengetriebe mit zwei gekoppelten, schaltbaren Nachschalt-Planetenradsätzen ausgebildet.

Selbstverständlich können aber auch andere Ausgestaltungen von Vorschaltsatz und Nachschaltsatz vorgesehen sein, beispielsweise mit weniger oder mehr gekoppelten Planetenradsätzen, mit beliebiger Bauteilekoppelungen innerhalb des Vorschaltsatzes und innerhalb des Nachschaltsatzes, mit festen Stirnradstufen anstelle von Planetenradsätzen innerhalb des Vorschaltsatzes und/oder des Nachschaltsatzes.

Erfindungsgemäß ist der Nachschaltsatz immer über mindestens ein Schaltelement mit der Antriebswelle des Getriebes verbindbar und immer über eine nicht schaltbare mechanische Verbindung mit dem Ausgang des Vorschaltsatzes verbunden.

Erfindungsgemäß wird vorgeschlagen, diese nicht schaltbare mechanische Verbindung zwischen dem Vorschaltsatz und dem Nachschaltsatz, sowie die Ankoppelung des Nachschaltsatzes an die Antriebswelle als Stirntrieb oder als Kegeltrieb oder als Hypoidtrieb auszubilden. In besonders vorteilhafter Weise ermöglicht diese Ausbildung kompakte, bauraumsparende Anordnungen von Vorschaltsatz und Nachschaltsatz des Mehrstufengetriebes für Anwendungen mit nicht-koaxialem An- und Abtrieb. Das solchermaßen ausgebildete erfindungsgemäße Mehrstufengetriebe eignet sich insbesondere für Kraftfahrzeuge mit quer zur Fahrtrichtung eingebautem Antriebsmotor ("Front-Quer-Antrieb", "Heck-Quer-Antrieb") oder mit längs zur Fahrtrichtung eingebautem Antriebsmotor und Front- bzw. Heck-Antrieb.

Durch selektives Schalten von auf den Vorschaltsatz wirkenden Schaltelementen bzw. durch die bauteilseitige Ausbildung des Vorschaltsatzes und dessen Anbindung an die Antriebswelle des Getriebes wird am Ausgang des Vorschaltsatzes eine bestimmte Drehzahl erzeugt, mit der die Verbindungswelle, also ein Stirnradpaar bzw. ein Kegelradpaar bzw. ein Hypoidradpaar rotiert.

In jedem geschalteten Gang sind mindestens zwei Schaltelemente geschaltet. Beim Umschalten von einem Gang in den nächsten wird dabei lediglich ein Schaltelement abgeschaltet und ein weiteres Schaltelement zugeschaltet, wodurch schaltqualitätskritische Gruppenschaltungen, bei denen mehrere Schaltelemente gleichzeitig zu- bzw. abgeschaltet werden müssen, vermieden werden.

Aus den Unteransprüchen gehen bevorzugte Ausgestaltungen der Erfindung hervor.

Im folgenden wird die Erfindung anhand der in den Figuren dargestellten Ausführungsformen eines Mehrstufengetriebes beispielhaft erläutert. Es zeigen:
- Figuren 1A und 1B eine erste Ausführungsform eines erfindungsgemäßen Mehrstufengetriebes mit einer Stirnradkoppelung zwischen Vorschalt- und Nachschaltsatz;
- Figur 2A eine zweite Ausführungsform eines erfindungsgemäßen Mehrstufengetriebes mit einer Stirnradkoppelung zwischen Vorschalt- und Nachschaltsatz; und
- Figur 3A eine dritte Ausführungsform eines erfindungsgemäßen Mehrstufengetriebes mit einer Kegelradkoppelung zwischen Vorschalt- und Nachschaltsatz.

In den Figuren mit Index A sind entsprechend der jeweiligen Ausführungsform das Getriebeschema des Mehrstufengetriebes dargestellt. Die Figur mit Index B zeigt die der Ausführungsform zugehörigen Schaltlogik, beispielhafte Übersetzungen der einzelnen Gänge, Gangstufung, Getriebespreizung und Standübersetzungen der einzelnen Planetenradsätze.

Um gegenüber der WO Ø 127 496 vergleichsweise kostengünstig herstellbare Mehrstufengetriebe mit mindestens sieben Vorwärtsgängen zu schaffen, wird die Vorschaltradsatzkombination an der Antriebswelle der Getriebes schaltbar ausgeführt. Durch diese Anordnung wird in Abhängigkeit der betätigten Schaltelemente eine weitere Drehzahl erzeugt, die zusätzlich zu der über die Antriebswelle eingeleitete Eingangsdrehzahl auf die ebenfalls schaltbar ausgeführte Nachschaltsatzkombination an der Abtriebswelle des Getriebes wirkt. Der Vorschaltsatz kann entsprechend der Betätigungslogik der Schaltelemente wahlweise auch verblockt oder festgesetzt werden.

Im eingangs beschriebenen bekannten Mehrstufengetriebe werden durch einen mit der Antriebswelle verbundenen Vorschaltsatz zwei zusätzliche Drehzahlen erzeugt, die zusammen mit der Antriebsdrehzahl auf den Nachschaltsatz wirken. Im Gegensatz zur vorliegenden Erfindung werden diese beiden Drehzahlen durch die Anordnung von zwei nicht schaltbaren Vorschalt-Planetenradsätzen erzeugt.

Durch Betätigen der Schaltelemente werden bei der vorliegenden Erfindung also die Ausgangsdrehzahl der Vorschaltradsatzkombination und die Eingangsdrehzahl des Getriebes entsprechend dem geschalteten Kraftfluß auf die Abtriebswelle übertragen. Durch die besondere Anordnung der Schaltelemente und Planetenradsätze lassen sich verschiedene Mehrstufengetriebe mit mindestens sieben Vorwärtsgängen konzipieren. Im folgenden wird die Erfindung beispielhaft an einem Neungang-Getriebe mit insgesamt sechs Schaltelementen und vier Planetenradsätzen detailliert beschrieben.

Wie schon erwähnt, können selbstverständlich auch andere Ausgestaltungen des Vorschalt- und Nachschaltsatzes sowie eine andere Anzahl und andere Anbindungen der Schaltelemente vorgesehen sein.

In allen Figuren ist mit 1 eine Antriebswelle des Getriebes und mit 3 eine Abtriebswelle des Mehrstufengetriebes bezeichnet. Das Mehrstufengetriebe weist stets einen schaltbaren Vorschaltsatz VS und einen mit über eine Ausgangsswelle 2 des Vorschaltsatzes VS verbundenen schaltbaren Nachschaltsatz NS auf. Die Antriebswelle 1 rotiert mit einer Eingangsdrehzahl n. Wenn zwei Schaltelemente des Vorschaltsatzes VS gemäß der Schaltlogik des Getriebes geschaltet, d.h. geschlossen sind, rotiert die Ausgangswelle 2 des Vorschaltsatzes VS mit einer Ausgangsdrehzahl nvs. Die Abtriebswelle 3 rotiert mit einer Ausgangsdrehzahl nns des Nachschaltsatzes NS. VS1 und VS2 bezeichnen einen ersten und zweiten Vorschalt-Planetenradsatz, NS1 und NS2 einen ersten und zweiten Nachschalt-Planetenradsatz. Das Radsatzkonzept, d.h. die bauteilseitige Koppelung der Planetenradsatzkomponeneten ist in den dargestellten beispielhaften Ausführungsformen identisch. Ebenfalls identisch ist die Anzahl und Anbindung der Schaltelemente an die einzelnen Planetenradsatzkomponeneten. Es sind drei auf den Vorschaltsatz VS wirkende Schaltelemente A, B und D vorgesehen, sowie drei auf den Nachschaltsatz NS wirkende Schaltelemente M, H und L.

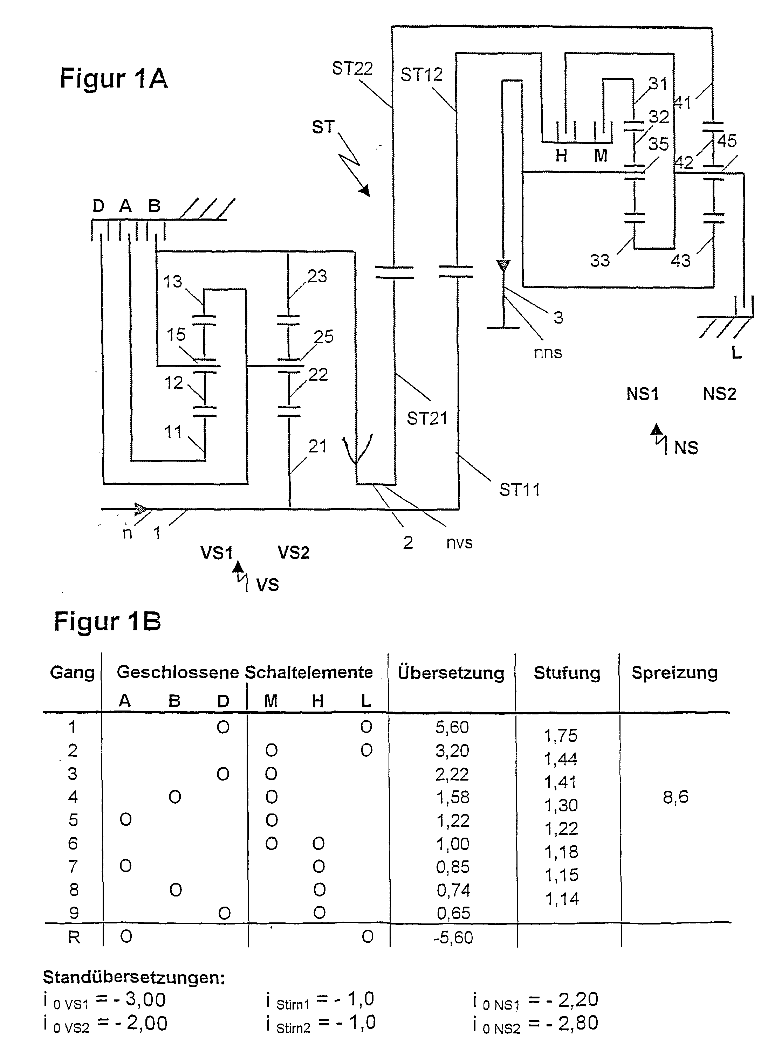

Figur 1A zeigt nun das Getriebeschema einer beispielhaften ersten Ausführungsform eines erfindungsgemäßen Mehrstufengetriebes, mit zwei zu einem Zweisteg-Vierwellen-Getriebe gekoppelten, schaltbaren Vorschalt-Planetenradsätzen VS1, VS2 und drei Schaltelementen A, B, D im Vorschaltsatz VS, sowie mit zwei zu einem Zweisteg-Vierwellen-Getriebe gekoppelten, schaltbaren Nachschalt-Planetenradsätzen NS1, NS2 und drei Schaltelementen M, H, L im Nachschaltsatz NS. Erfindungsgemäß sind Vorschaltsatz VS und Nachschaltsatz NS über einen Stirntrieb ST verbunden, wobei der Stirntrieb ST zwei Stirnradstufen aufweist. Die erste Stirnradstufe umfaßt ein eingangsseitige Stirnrad ST11 und ein ausgangsseitiges Stirnrad ST12 und verbindet die Antriebswelle 1 mit einer freien Welle des Nachschaltsatzes NS, hier mit einem Zentralrad des ersten Nachschalt-Planetenradsatzes NS1. Analog zur Nomenklatur der ersten Stirnradstufe umfaßt die zweite Stirnradstufe die Stirnräder ST21 (eingangsseitig) und ST22 (ausgangsseitig) und verbindet die Ausgangswelle 2 des Vorschaltsatzes VS mit einer anderen freien Welle des Nachschatsatzes NS, hier mit einem Zentralrad des zweiten Nachschaltsatzes NS2.

Wie in Figur 1A gezeigt, sind alle vier Planetenradsätze VS1, VS2, NS1 und NS2 als Minus-Getriebe ausgebildet, jeweils mit einem Sonnenrad 11, 21, 31 und 41, einem Hohlrad 13, 23, 33 und 43, sowie einem Steg 15, 25, 35 und 45 mit Planetenrädern 12, 22, 32 und 42.

Das Sonnenrad 11 des ersten Vorschaltsatzes VS1 ist über das als Bremse ausgebildete erste Schaltelement A des Vorschaltsatzes VS festsetzbar. Das Sonnenrad 21 des zweiten schaltbaren Vorschalt-Planetenradsatzes VS2 ist fest mit der Antriebswelle 1 (Drehzahl n) verbunden. Der Steg 15 des ersten Vorschalt-Planetenradsatzes VS1 und das Hohlrad 23 des zweiten Vorschalt-Planetenradsatzes VS2 sind gekoppelt und über das als Bremse ausgebildete zweite Schaltelement B des Vorschaltsatzes VS festsetzbar. Das Hohlrad 13 des ersten Vorschalt-Planetenradsatzes VS1 und der Steg 25 des zweiten Vorschalt-Planetenradsatzes sind gekoppelt und über das als Bremse ausgebildete dritte Schaltelement D des Vorschaltsatzes VS festsetzbar. Das Hohlrad 23 des zweiten Vorschalt-Planetenradsatzes VS2 und der angekoppelte Steg 15 des ersten Vorschalt-Planetenradsatzes VS1 bilden gleichzeitig den Abtrieb des Vorschaltsatzes VS und sind entsprechend mit dessen Ausgangswelle 2 (Drehzahl nvs) verbunden.

Erfindungsgemäß ist die Antriebswelle 1 fest mit dem Stirnrad ST11 der ersten Stirnradstufe ST11/ST12 des Stirntriebs ST verbunden, und die Ausgangswelle 2 des Vorschaltsatzes VS fest mit dem Stirnrad ST21 der zweiten Stirnradstufe ST21/ST22 des Stirntriebs ST. Das mit dem Stirnrad ST11 kämmende Stirnrad ST12 ist über das erste, als Kupplung ausgebildete Schaltelement M des Nachschaltsatzes NS mit dem Sonnenrad 31 des ersten Nachschalt-Planetenradsatzes NS1 verbindbar, sowie über das zweite, als Kupplung ausgebildete Schaltelement H des Nachschaltsatzes NS mit dem Hohlrad 33 des ersten Nachschalt-Planetenradsatzes NS1 und dem an das Hohlrad 33 angekoppelten Steg 45 des zweiten Nachschalt-Planetenradsatzes NS2 verbindbar. Das mit dem Stirnrad ST21 kämmende Stirnrad ST22 ist fest mit dem Sonnenrad 41 des zweiten Nachschalt-Planetenradsatzes NS2 verbunden.

Vorschaltsatz VS und Nachschaltsatz NS sind achsparallel axial nebeneinander angeordnet, mit einem Mittelachsversatz zueinander. Die Stirnradstufe ST ist erfindungsgemäß axial zwischen Vorschaltsatz VS und Nachschaltsatz NS angeordnet.

Der Steg 45 des zweiten Nachschalt-Planetenradsatzes NS2 und das an den Steg 45 gekoppelte Hohlrad 33 des ersten Nachschalt-Planetenradsatzes NS1 sind über das als Bremse ausgebildete dritte Schaltelement L des Nachschaltsatzes NS festsetzbar. Das Hohlrad 43 des zweiten Nachschalt-Planetenradsatzes NS2 und der Steg 35 des ersten Nachschalt-Planetenradsatzes NS1 sind gekoppelt, bilden den Abtrieb des Nachschaltsatzes NS (Drehzahl nns) und sind mit der Abtriebswelle 3 des Getriebes verbunden.

Im ausgeführten Beispiel gemäß Figur 1A weisen beide Stirnradstufen ST11/ST12 und ST21/ST22 ein Übersetzungsverhältnis "eins" auf. In anderen Ausführungsformen eines erfindungsgemäßen Mehrstufengetriebes können selbstverständlich auch andere Übersetzungsverhälnisse vorgesehen sein. Auch können die Stirnradstufen ST11/ST12 und ST21/ST22 unterschiedliche Übersetzungsverhältnis aufweisen oder auch mehr als zwei Stirnräder je Stirnradstufe oder auch eine unterschiedliche Anzahl an Stirnrädern je Stirnradstufe.

Für die Drehzahlen an den Wellen und Schaltelementen gilt für die in erste Ausführungsform eines erfindungsgemäßen Mehrstufengetriebes folgendes:
1. Das Übersetzungsverhältnis beider Stirnradstufen ST11/ST12 und ST21/ST22 beträgt "eins";
2. die Drehzahl an der Antriebswelle 1 und an dem Schaltelement H ist gleich (Eingangsdrehzahl n);
3. die Drehzahl am geschalteten Schaltelement A ist "null";
4. die Drehzahl am geschalteten Schaltelement B ist "null";
5. die Drehzahl am geschalteten Schaltelement D ist "null";
6. die Drehzahl am geschalteten Schaltelement L ist "null";
7. die Drehzahl an dem mit der Ausgangswelle 2 verbundenen Zentralrad des zweiten Nachschalt-Planetenradsatzes NS2 ist bei geschalteten Schaltelementen H und M gleich oder größer als eine der durch den Vorschaltsatz VS erzeugten Drehzahlen nvs;
8. die Drehzahl an der Welle, welche das Schaltelement B mit einem Zentralrad des zweiten Vorschalt-Planetenradsatzes VS2 verbindet, ist bei geschalteten Schaltelementen A und D kleiner als oder gleich wie die bei betätigtem Schaltelement B erzeugte Drehzahl;
9. die Drehzahl an der Welle, welche das Schaltelement B mit dem Zentralrad des zweiten Vorschalt-Planetenradsatzes VS2 verbindet, ist bei geschaltetem Schaltelement A größer als oder gleich wie die bei betätigtem Schaltelement B erzeugte Drehzahl;
10. die Drehzahl am geschalteten Schaltelement M ist größer null und kleiner als oder gleich wie die Eingangsdrehzahl n der Antriebswelle 1; und
11. die Drehzahl an dem mit der Ausgangswelle 2 verbundenen Zentralrad des zweiten Nachschalt-Planetenradsatzes NS2 ist bei geschalteten Schaltelementen L und M kleiner als oder gleich wie die durch den Vorschaltsatz VS erzeugte Drehzahl nvs.

Mit der Anordnung der Figur 1A lassen sich durch selektives Schließen der sechs Schaltelemente die in Figur 1B tabellarisch aufgeführten neun Vorwärtsgänge und ein Rückwärtsgang ohne Gruppenschaltung schalten, mit sehr harmonischer Stufung und großer Spreizung. Dabei sind drei der Vorwärtsgänge antriebsdrehzahlsenkend als Overdrive-Gänge ausgeführt.

In vorteilhafter Weise sind vier der sechs Schaltelemente als Bremsen ausgebildet, entsprechend günstig ist der konstruktiver Bauaufwand insbesondere hinsichtlich deren Druckölzuführung. Die erfindungsgemäße Koppelung von Vorschalt- und Nachschaltsatz über eine feste Stirnradstufe ermöglicht sehr kurz bauende, vielgängige Mehrstufengetriebe ist besonders günstig für Anwendungen in Kraftfahrzeugen mit quer zur Fahrtrichtung angeordneten Antriebsmotoren ("Front-Quer-Antrieb" oder "Heck-Quer-Antrieb"). Dabei erlaubt die versetzte Anordnung von Antriebs- und Abtriebswelle des Getriebes die Verwendung von Stirnräder mit relativ kleinem Durchmesser.

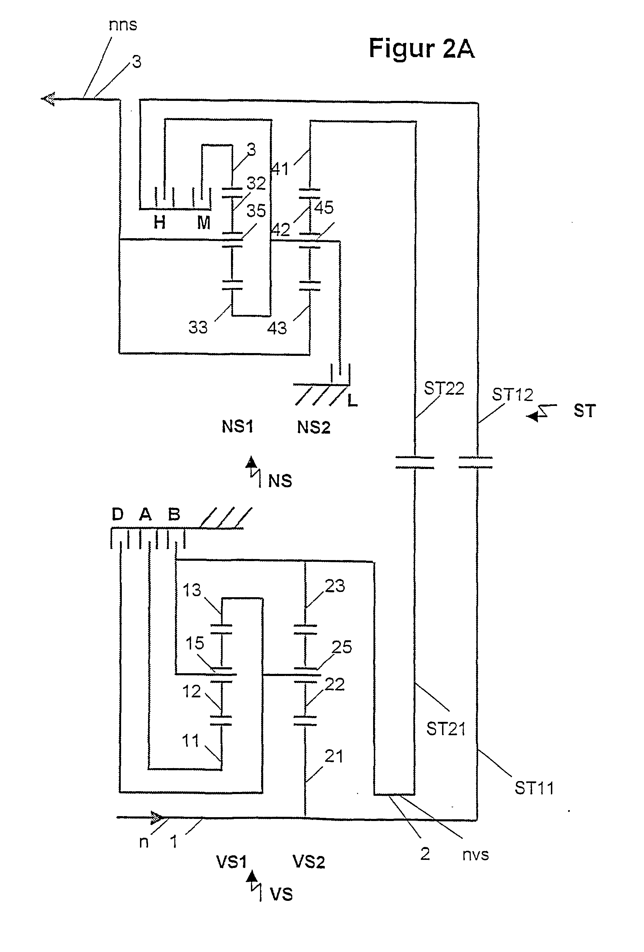

Figur 2A stellt nun das Getriebeschema einer beispielhaften zweiten Ausführungsform eines erfindungsgemäßen Mehrstufengetriebes dar. Im Unterschied zu der zuvor beschriebenen ersten Ausführungsform sind Vorschaltsatz VS und Nachschaltsatz NS achsparallel in einer Ebene angeordnet. Die Stirnradstufe ST, welche den Vorschaltsatz VS und Nachschaltsatz NS verbindet, ist nunmehr axial neben Vorschaltradsatz VS und Nachschaltsatz NS angeordnet. Die Abtriebswelle 3 des Getriebes ist wiederum achsparallel zur Antriebswelle 1.

Die Ausgestaltung des Vorschaltsatzes VS mit zwei schaltbaren, als Zweisteg-Vierwellen-Getriebe gekoppelten Vorschalt-Planetenradsätzen VS1, VS2 und drei Bremsen A, B, D und die Ausgestaltung des Nachschaltsatzes NS mit zwei schaltbaren, als Zweisteg-Vierwellen-Getriebe gekoppelten Nachschalt-Planetenradsätzen NS1, NS2 und zwei Kupplungen M, H und einer Bremse L entspricht unverändert deren in Figur 1A gezeigten Ausgestaltung.

Wie in Figur 2A dargestellt, umfaßt der Stirntrieb ST unverändert die Stirnradpaare ST11/ST12 und ST21/ST22. Das mit dem Stirnrad ST11 kämmende Stirnrad ST12 ist über das erste, als Kupplung ausgebildete Schaltelement M des Nachschaltsatzes NS mit dem Sonnenrad 31 des ersten Nachschalt-Planetenradsatzes NS1 verbindbar, sowie über das zweite, als Kupplung ausgebildete Schaltelement H des Nachschaltsatzes NS mit dem Hohlrad 33 des ersten Nachschalt-Planetenradsatzes NS1 und dem an das Hohlrad 33 angekoppelten Steg 45 des zweiten Nachschalt-Planetenradsatzes NS2 verbindbar. Das mit dem Stirnrad ST21 kämmende Stirnrad ST22 ist fest mit dem Sonnenrad 41 des zweiten Nachschalt-Planetenradsatzes NS2 verbunden.

Wegen seiner sehr kurzen axialen Erstreckung eignet sich die beschriebene zweite Ausführungsform eines erfindungsgemäßen Mehrstufengetriebes in besonders vorteilhafter Weise für Anordnungen in Kraftfahrzeugen mit quer zur Fahrtrichtung liegendem Antriebsmotor und axial beengtem Bauraum für das Getriebe.

Wie bei der zuvor beschriebenen ersten Ausführungsform eines erfindungsgemäßen Mehrstufengetriebes sind auch bei der zweiten Ausführungsform beide Stirnradstufen ST11/ST12 und ST21/ST22 des Stirntriebs ST mit Übersetzungsverhältnis "eins" ausgeführt. Selbstverständlich können auch hier andere Übersetzungsverhälnisse vorgesehen sein, beispielsweise um den Stirnräder-Durchmesser an einen vorhandenen Bauraum anzupassen. Auch können die Stirnradstufen ST11/ST12 und ST21/ST22 des Stirntriebs ST unterschiedliche Übersetzungsverhältnis aufweisen. In einer anderen Ausgestaltung kann vorgesehen sein, daß die treibenden und getriebenen Wellen der Stirnradstufe ST nicht achsparallel ausgebildet sind. In einer weiteren Ausgestaltung kann auch vorgesehen sein, daß die beiden Stirnradstufen der Stirntrieb ST jeweils mehr als zwei Stirnräder aufweisen oder auch eine unterschiedliche Anzahl an Stirnrädern je Stirnradstufe.

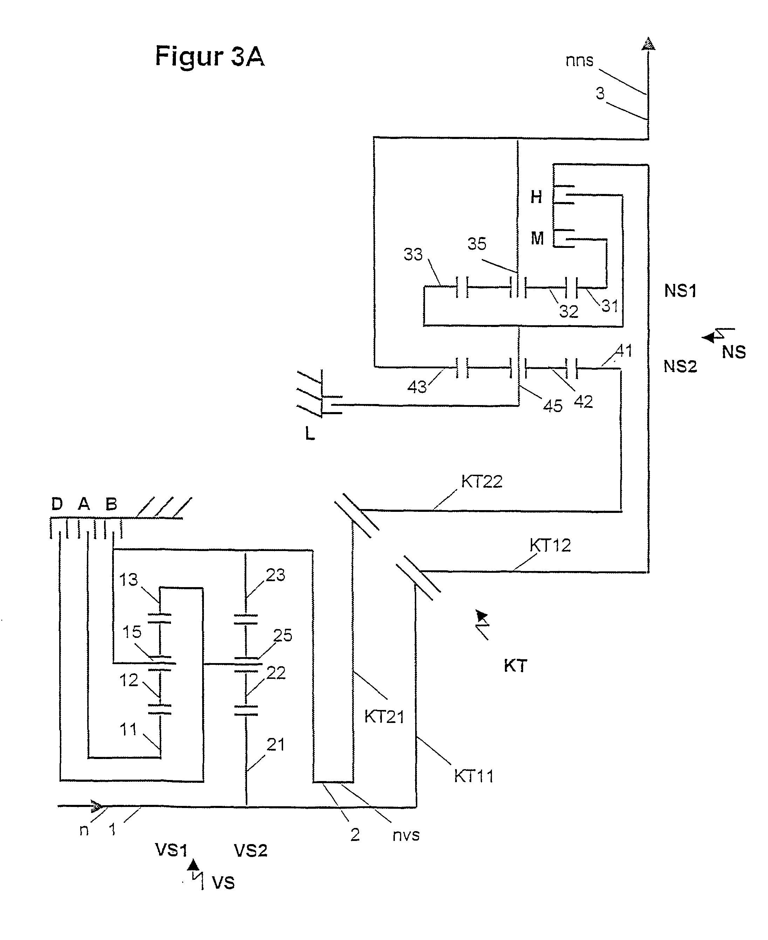

Figur 3A stellt nun das Getriebeschema einer dritten Ausführungsform eines erfindungsgemäßen Mehrstufengetriebes dar. Im Unterschied zu den zuvor beschriebenen Ausführungsformen eins und zwei sind Vorschaltsatz VS und Nachschaltsatz NS nunmehr über eine Kegelradstufe KT miteinander verbunden, anstelle über die Stirnradstufe ST. Die Mittelachen von Vorschaltsatz VS und Nachschaltsatz NS sind vorzugsweise rechtwinklig zueinander versetzt, wobei die Baugruppen Vorschaltsatz VS und Nachschaltsatz NS weitgehend ohne räumliche Überdeckung nebeneinander angeordnet sind.

Der Kegeltrieb KT kann aber auch einen anderen Winkel zwischen seinen treibenden und getriebenen Wellen aufweisen. Auch kann der Kegeltrieb KT als rechtwinkliger oder nicht rechtwinkliger Hypoidkegeltrieb mit einem Achsversatz, also als sogenanntes Kegelschraubgetriebe ausgebildet sein.

Die Ausgestaltung des Vorschaltsatzes VS mit zwei schaltbaren, als Zweisteg-Vierwellen-Getriebe gekoppelten Vorschalt-Planetenradsätzen VS1, VS2 und drei Bremsen A, B, D und die Ausgestaltung des Nachschaltsatzes NS mit zwei schaltbaren, als Zweisteg-Vierwellen-Getriebe gekoppelten Nachschalt-Planetenradsätzen NS1, NS2 und zwei Kupplungen M, H und einer Bremse L entspricht unverändert deren in Figur 1A und 2A gezeigten Ausgestaltungen.

Wie in Figur 3A dargestellt, umfaßt der Kegeltrieb KT die Kegelradpaare KT11/KT12 und KT21/KT22. Das mit dem Kegelrad KT11 kämmende Kegelrad KT12 ist über das erste, als Kupplung ausgebildete Schaltelement M des Nachschaltsatzes NS mit dem Sonnenrad 31 des ersten Nachschalt-Planetenradsatzes NS1 verbindbar, sowie über das zweite, als Kupplung ausgebildete Schaltelement H des Nachschaltsatzes NS mit dem Hohlrad 33 des ersten Nachschalt-Planetenradsatzes NS1 und dem an das Hohlrad 33 angekoppelten Steg 45 des zweiten Nachschalt-Planetenradsatzes NS2 verbindbar. Das mit dem Kegelrad KT21 kämmende Kegelrad KT22 ist fest mit dem Sonnenrad 41 des zweiten Nachschalt-Planetenradsatzes NS2 verbunden.

Bei der in Figur 3A gezeigten dritten beispielhaften Ausführungsform eines erfindungsgemäßen Mehrstufengetriebes sind beide Kegelradpaare KT11/KT12 und KT21/KT22 mit Übersetzungsverhältnis "eins" ausgeführt. Selbstverständlich können auch hier andere Übersetzungsverhälnisse vorgesehen sein, beispielsweise um den Kegelrad-Durchmesser an einen vorhandenen Bauraum anzupassen. Auch können die Kegelradpaare KT11/KT12 und KT21/KT22 unterschiedliche Übersetzungsverhältnis aufweisen.

Wegen des Winkels zwischen Vorschalt- und Nachschaltsatz eignet sich die beschriebene dritte beispielhafte Ausführungsform eines erfindungsgemäßen Mehrstufengetriebes in besonders vorteilhafter Weise für eine Anwendung in einem Kraftfahrzeug mit zur Fahrrichtung längs angeordnetem Antriebsmotor ("Front-Längs-Antrieb", "Heck-Längs-Antrieb"), aber auch für Kraftfahrzeuge mit Allrad-Antrieb.

In einer nicht dargestellten Weiterbildung der Erfindung kann auch vorgesehen sein, daß der erfindungsgemäße Stirntrieb ST zwischen dem Vorschaltsatz VS und dem Nachschaltsatz NS ersetzt ist durch einen Kettentrieb. Zwischen der Verbindungswelle 2 und dem Nachschaltsatz NS, sowie zwischen der Antriebswelle 1 und dem Nachschaltsatz NS sind dabei je einem treibenden und einem getriebenen Rad, sowie je einem Zugmittel - beispielsweise eine Kette oder ein Zahnriemen - zur Drehmomentübertragung zwischen treibendem und getriebenem Rad.

Prinziell kann anstelle des Kettentriebs, dessen Drehmomentübertragung formschlüssig erfolgt, auch ein Umschlingungstrieb vorgesehen sein, dessen Drehmomentübertragung kraftschlüssig erfolgt, beispielsweise über einen Keilriemen.

In einer Ausgestaltung des Kettentriebs bzw. des Umschlingungstriebs kann auch nur eine einzelne Kette bzw. nur ein einzelnes Umschlingungselement vorgesehen sein, welches entweder zwischen der Verbindungswelle 2 und dem Nachschaltsatz NS oder zwischen der Antriebswelle 1 und dem Nachschaltsatz NS angeordnet ist, wobei die jeweils andere mechanische Verbindung zum Nachschaltsatz NS dann als einzelne Stirnradstufe mit vorzugsweise drei Stirnrädern ausgebildet ist.

### Bezugszeichen

- VS: Vorschaltsatz
- VS1: erster Vorschalt-Planetenradsatz
- VS2: zweiter Vorschalt-Planetenradsatz
- NS: Nachschaltsatz
- NS1: erster Nachschalt-Planetenradsatz
- NS2: zweiter Nachschalt-Planetenradsatz
- ST: Stirntrieb
- ST11/ST12: erste Stirnradstufe zwischen Antriebswelle und Nachschaltsatz
- ST21/ST22: zweite Stirnradstufe zwischen Verbindungswelle und Nachschaltsatz
- ST11: eingangsseitiges Stirnrad der ersten Stirnradstufe
- ST12: ausgangsseitiges Stirnrad der ersten Stirnradstufe
- ST21: eingangsseitiges Stirnrad der zweiten Stirnradstufe
- ST22: ausgangsseitiges Stirnrad der zweiten Stirnradstufe

- KT: Kegeltrieb
- KT11/KT12: erstes Kegelradpaar zwischen Antriebswelle und Nachschaltsatz
- KT21/KT22: zweites Kegelradpaar zwischen Verbindungswelle und Nachschaltsatz
- KT11: eingangsseitiges Kegelrad des ersten Kegelradpaars
- KT12: ausgangsseitiges Kegelrad des ersten Kegelradpaars
- KT21: eingangsseitiges Kegelrad des zweiten Kegelradpaars
- KT22: ausgangsseitiges Kegelrad des zweiten Kegelradpaars

- A, B, D: erstes bis drittes Schaltelemente des Vorschaltsatzes
- M, H, L: erstes bis drittes Schaltelement des Nachschaltsatzes

- n: Eingangsdrehzahl der Antriebswelle
- nvs: Ausgangsdrehzahl des Vorschaltsatzes
- nns: Ausgangsdrehzahl des Nachschaltsatzes

- 1: Antriebswelle
- 2: Ausgangswelle des Vorschaltsatzes
- 3: Abtriebswelle

- 11: Sonnenrad des Radsatzes VS1
- 12: Planetenrad des Radsatzes VS1
- 13: Hohlrad des Radsatzes VS1
- 15: Steg des Radsatzes VS1

- 21: Sonnenrad des Radsatzes VS2
- 22: Planetenrad des Radsatzes VS2
- 23: Hohlrad des Radsatzes VS2
- 25: Steg des Radsatzes VS2

- 31: Sonnenrad des Radsatzes NS1
- 32: Planetenrad des Radsatzes NS1
- 33: Hohlrad des Radsatzes NS1
- 35: Steg des Radsatzes NS1

- 41: Sonnenrad des Radsatzes NS2
- 42: Planetenrad des Radsatzes NS2
- 43: Hohlrad des Radsatzes NS2
- 45: Steg des Radsatzes NS2

## Patentansprüche

1. Mehrstufengetriebe, mit einer Antriebswelle (1), die mit einem Vorschaltsatz (VS) verbunden ist, mit einer Abtriebswelle (3), die zur Antriebswelle (1) nicht koaxial angeordnet ist und mit einem Nachschaltsatz (NS) verbunden ist, mit auf den Vorschaltsatz (VS) wirkenden Schaltelementen (A, B, D) und mit auf den Nachschaltsatz (NS) wirkenden Schaltelementen (M, H, L), wobei durch selektives Schalten der Schaltelemente (A, B, D, M, H, L) eine Eingangsdrehzahl (n) der Antriebswelle (1) zur Schaltung von mindestens sieben Vorwärtsgängen derart auf die Abtriebswelle (3) übertragbar ist, daß zum Umschalten von einem Gang in den nächstfolgend höheren oder nächstfolgend niedrigeren Gang von den gerade betätigten Schaltelementen jeweils nur ein Schaltelement abgeschaltet und ein weiteres Schaltelement zugeschaltet wird, wobei der Vorschaltsatz (VS) genau eine mit einer Ausgangsdrehzahl (nvs) des Vorschaltsatzes (VS) rotierenden Ausgangswelle (2) aufweist, der Nachschaltsatz (NS) über mindestens ein auf den Nachschaltsatz (NS) wirkendes zweites Schaltelement (M, H) über eine erste Stirnradstufe (ST11/ST12) eines Stirntriebs (ST) mit der Antriebswelle (1) verbindbar ist, und der Nachschaltsatz (NS) über eine zweite Stirnradstufe (ST21/ST22) des Stirntriebs (ST) mit der Ausgangswelle (2) des Vorschaltsatzes (VS) verbunden ist.

2. Mehrstufengetriebe nach Anspruch 1, wobei beide Stirnradstufen (ST11/ST12, ST21/ST22) des Stirntriebs (ST) ein Übersetzungsverhältnis eins aufweisen.

3. Mehrstufengetriebe nach Anspruch 1, wobei beide Stirnradstufen (ST11/ST12, ST21/ST22) des Stirntriebs (ST) ein Übersetzungsverhältnis kleiner oder größer eins aufweisen.

4. Mehrstufengetriebe nach einem oder mehrerer der Ansprüche 1 bis 3, wobei die Stirnradstufen (ST11/ST12, ST21/ST22) des Stirntriebs (ST) jeweils nicht achsparalle treibende und getriebene Achsen aufweisen.

5. Mehrstufengetriebe nach einem oder mehrerer der Ansprüche 1 bis 4, wobei die Stirnradstufen (ST11/ST12, ST21/ST22) des Stirntriebs (ST) jeweils aus einem Stirnradpaaren (ST11 und ST12 bzw. ST21 und ST22) gebildet werden.

6. Mehrstufengetriebe nach einem oder mehrerer der Ansprüche 1 bis 4, wobei die Stirnradstufen (ST11/ST12, ST21/ST22) des Stirntriebs (ST) jeweils mehr als zwei Stirnräder aufweisen.

7. Mehrstufengetriebe nach einem oder mehrerer der Ansprüche 1 bis 4, wobei die Stirnradstufen (ST11/ST12, ST21/ST22) des Stirntriebs (ST) eine unterschiedliche Anzahl von Stirnrädern aufweisen.

8. Mehrstufengetriebe nach einem oder mehrerer der Ansprüche 1 bis 7, wobei der Stirntrieb (ST) axial zwischen dem Vorschaltsatz (VS) und dem Nachschaltsatz (NS) angeordnet ist, wobei Vor- und Nachschaltsatz (VS, NS) zueinander einen Mittelachsversatz aufweisen.

9. Mehrstufengetriebe nach einem oder mehrerer der Ansprüche 1 bis 7, wobei Vorschaltsatz (VS) und Nachschaltsatz (NS) achsparallel weitgehend in einer Ebene angeordnet sind, und daß der Stirntrieb (ST) axial neben Vor- und Nachschaltsatz (VS, NS) auf der einem Antriebsmotor des Mehrstufengetriebes abgewandten Seite des Vor- und Nachschaltsatzes (VS, NS) angeordnet ist.

10. Mehrstufengetriebe, mit einer Antriebswelle (1), die mit einem Vorschaltsatz (VS) verbunden ist, mit einer Abtriebswelle (3), die zur Antriebswelle (1) nicht koaxial angeordnet ist und mit einem Nachschaltsatz (NS) verbunden ist, mit auf den Vorschaltsatz (VS) wirkenden Schaltelementen (A, B, D) und mit auf den Nachschaltsatz (NS) wirkenden Schaltelementen (M, H, L), wobei durch selektives Schalten der Schaltelemente (A, B, D, M, H, L) eine Eingangsdrehzahl (n) der Antriebswelle (1) zur Schaltung von mindestens sieben Vorwärtsgängen derart auf die Abtriebswelle (3) übertragbar ist, daß zum Umschalten von einem Gang in den nächstfolgend höheren oder nächstfolgend niedrigeren Gang von den gerade betätigten Schaltelementen jeweils nur ein Schaltelement abgeschaltet und ein weiteres Schaltelement zugeschaltet wird, wobei der Vorschaltsatz (VS) genau eine mit einer Ausgangsdrehzahl (nvs) des Vorschaltsatzes (VS) rotierenden Ausgangswelle (2) aufweist, der Nachschaltsatz (NS) über mindestens ein auf den Nachschaltsatz (NS) wirkendes zweites

11. Mehrstufengetriebe nach Anspruch 10, wobei der Kegeltrieb (KT) als Hypoid-Kegeltrieb ausgebildet ist mit einem Achsversatz der ersten Kegelradpaars (KT11/KT21) bzw. des zweiten Kegekradpaars (KT21/KT22).

12. Mehrstufengetriebe nach Anspruch 10 oder 11, wobei der Winkel zwischen treibender und getriebener Achse des Kegeltriebs (KT) neunzig Grad beträgt.

13. Mehrstufengetriebe nach Anspruch 10 oder 11, wobei der Winkel zwischen treibender und getriebener Achse des Kegeltriebs (KT) kleiner oder größer als neunzig Grad ist.

14. Mehrstufengetriebe nach einem oder mehrerer der Ansprüche 10 bis 13, wobei das Übersetzungsverhältnis beider Kegelradpaare (KT11/KT21, KT21/KT22) des Kegeltriebs (KT) eins beträgt.

15. Mehrstufengetriebe nach einem oder mehreren der Ansprüche 10 bis 13, wobei das Übersetzungsverhältnis beider Kegelradpaare (KT11/KT21, KT21/KT22) des Kegeltriebs (KT) kleiner oder größer eins ist.

16. Mehrstufengetriebe nach einem oder mehreren der Ansprüche 10 bis 13, wobei das Übersetzungsverhältnis beider Kegelradpaare (KT11/KT21, KT21/KT22) des Kegeltriebs (KT) unterschiedlich ist.

17. Mehrstufengetriebe nach einem oder mehrerer der Ansprüche 10 bis 16, wobei der Kegeltrieb (KT) axial neben dem Vorschaltsatz (VS) auf der einem Antriebsmotor des Mehrstufengetriebes abgewandten Seite des Vorschaltsatzes (VS) angeordnet ist, und daß Vorschaltsatz (VS) und Nachschaltsatz (NS) weitgehend ohne räumliche Überdeckung nebeneinander angeordnet sind.

18. Mehrstufengetriebe nach einem oder mehrerer der vorigen Ansprüche, wobei der Vorschaltsatz (VS) mindestens zwei gekoppelte, nicht schaltbare Vorschalt-Planetenradsätze (VS1, VS2) aufweist, und daß der Nachschaltsatz (NS) mindestens zwei gekoppelte Nachschalt-Planetenradsätze (NS1, NS2) aufweist, wobei mindestens einer der Nachschalt-Planetenradsätze (NS1, NS2) schaltbar ist.

19. Mehrstufengetriebe nach einem oder mehrerer der Ansprüche 1 bis 17, wobei der Vorschaltsatz (VS) mindestens zwei gekoppelte Vorschalt-Planetenradsätzen (VS1, VS2) aufweist, wobei mindestens einer der Vorschalt-Planetenradsätze (VS1, VS2) schaltbar ist, daß der Nachschaltsatz (NS) mindestens zwei gekoppelte Nachschalt-Planetenradsätze (NS1, NS2) aufweist, wobei mindestens einer der Nachschalt-Planetenradsätze (NS1, NS2) schaltbar ist, und daß die Ausgangsdrehzahl (nvs) des Vorschaltsatzes (VS) durch selektives Schließen von auf den Vorschaltsatz (VS) wirkenden Schaltelementen (A, B, D) erzeugt wird.

20. Mehrstufengetriebe nach Anspruch 18 oder 19, wobei die Ausgangswelle (2) des Vorschaltsatzes (VS) über die zweite Stirnradstufe (ST21/ST22) der Stirnradstufe (ST) bzw. das zweite Kegelradpaar (KT21/KT22) der Kegelradstufe (KT) mit einem Zentralrad des zweiten Nachschalt-Planetenradsatzes (NS2) verbunden ist.

21. Mehrstufengetriebe nach Anspruch 18, 19 oder 20, wobei das Mehrstufengetriebe zwei Vorschalt-Planetenradsätze (VS1, VS2), zwei Nachschalt-Planetenradsätze (NS1, NS2) und insgesamt sechs Schaltelemente (A, B, D, M, H, L) aufweist, und daß insgesamt neun Vorwärtsgänge schaltbar sind.

22. Mehrstufengetriebe nach Anspruch 19, 20 und 21, wobei
- der Vorschaltsatz (VS) umfaßt drei Schaltelemente (A, B, D) sowie zwei gekoppelte, schaltbare Vorschalt-Planetenradsätze (VS1, VS2) mit jeweils einem Sonnenrad (11, 21), einem Hohlrad (13, 23) und einem Steg (15, 25) mit Planetenrädern (12, 22);
- der Nachschaltsatz (NS) umfaßt drei Schaltelemente (H, M, L) sowie zwei gekoppelte, schaltbare Nachschalt-Planetenradsätze (NS1, NS2) mit jeweils einem Sonnenrad (31, 41), einem Hohlrad (33, 43) und einem Steg (35, 45) mit Planetenrädern (32, 42);
- der Stirn- bzw. Kegeltrieb (ST bzw. KT) umfaßt eine erste Stirnradstufe (ST11/ST12) bzw. ein erstes Kegelradpaar (KT11/KT12) mit einem eingangsseitigen Stirn- bzw. Kegelrad (ST11 bzw. KT11) und einem ausgangsseitigen Stirn- bzw. Kegelrad (ST12 bzw. KT12), sowie eine zweite Stirnradstufe (ST21/ST22) bzw. ein zweites Kegelradpaar (KT21/KT22) mit einem eingangsseitigen Stirn- bzw. Kegelrad (ST21 bzw. KT21) und einem ausgangsseitigen Stirn- bzw. Kegelrad (ST22 bzw. KT22);
- das Sonnenrad (11) des ersten Vorschalt-Planetenradsatzes (VS1) ist über das erste Schaltelement (A) des Vorschaltsatzes (VS) festsetzbar;
- das Sonnenrad (21) des zweiten Vorschalt-Planetenradsatzes (VS2) ist mit der Antriebswelle (1) verbunden;
- das Hohlrad (13) des ersten Vorschalt-Planetenradsatzes (VS1) und der Steg (25) des zweiten Vorschalt-Planetenradsatzes (VS2) und sind miteinander verbunden und über das dritte Schaltelement (D) des Vorschaltsatzes (VS) festsetzbar;
- das Hohlrad (23) des zweiten Vorschalt-Planetenradsatzes (VS2) und der Steg (15) des ersten Vorschalt-Planetenradsatzes (VS1) sind miteinander und mit der Ausgangswelle (2) des Vorschaltsatzes (VS) verbunden, sowie über das zweite Schaltelement (B) des Vorschaltsatzes (VS) festsetzbar;
- die Antriebswelle (1) ist mit dem eingangsseitigen Stirn- bzw. Kegelrad (ST11 bzw KT11) der ersten Stirnradstufe (ST11/ST12) bzw. des ersten Kegelradpaares (KT11/KT12) verbunden;
- die Ausgangswelle (2) des Vorschaltsatzes (VS) ist mit dem eingangsseitigen Stirn- bzw. Kegelrad (ST21 bzw. KT21) der zweiten Stirnradstufe (ST21/ST22) bzw. des zweiten Kegelradpaares (KT21/KT22) verbunden;
- das Sonnenrad (31) des ersten Nachschalt-Planetenradsatzes (NS1) ist über das erste Schaltelement (M) des Nachschaltsatzes (NS) mit dem ausgangsseitigen Stirn- bzw. Kegelrad (ST12 bzw. KT12) der ersten Stirnradstufe (ST11/ST12) bzw. des ersten Kegelradpaares (KT11/KT12) verbindbar;
- das Sonnenrad (41) des zweiten Nachschalt-Planetenradsatzes (NS2) ist mit dem ausgangsseitigen Stirn- bzw. Kegelrad (ST22 bzw. KT22) der zweiten Stirnradstufe (ST21/ST22) bzw. des zweiten Kegelradpaares (KT21/KT22) verbunden;
- das Hohlrad (33) des ersten Nachschalt-Planetenradsatzes (NS1) und der Steg (45) des zweiten Nachschalt-Planetenradsatzes (NS2) sind miteinander verbunden, über das zweite Schaltelement (H) des Nachschaltsatzes (NS) mit dem ausgangsseitigen Stirn- bzw. Kegelrad (ST12 bzw. KT12) der ersten Stirnradstufe (ST11/ST12) bzw. des ersten Kegelradpaares (KT11/KT12) verbindbar, sowie über das dritte Schaltelement (L) des Nachschaltsatzes (NS) festsetzbar; und
- das Hohlrad (43) des zweiten Nachschalt-Planetenradsatzes (NS2) und der Steg (35) des ersten Nachschalt-Planetenradsatzes (NS1) sind miteinander und mit der Abtriebswelle (3) verbunden.

## Claims

1. The invention relates to a multistep reduction gear which comprises a drive shaft (1) which is connected to a front-mounted unit (VS) and an output shaft (3) which is arranged non-coaxially in relation to the drive shaft (1) and is connected to a rear-mounted unit (NS), and which is provided with control elements (A, B, D) acting on the front-mounted unit (VS) and with control elements (M, H, L) acting on the rear-mounted unit (NS), with selective activation of the control elements (A, B, D, M, H, L) permitting an input speed (n) of the drive shaft (1) to be transmitted to the output shaft (3) for the shifting of at least seven forward speeds in such a way that during upshifts to the next higher gear or downshifts to the next lower gear in each case only one of the control elements activated is deactivated while another control element is activated, with the front-mounted unit (VS) featuring an output shaft (2) rotating precisely at an output speed (nvs) of the front-mounted unit (VS), and with the rear-mounted unit (NS) being capable of being linked to the drive shaft (1) via at least one second control element (M, H) acting on the rear-mounted unit (NS) via a first spur-gear stage (ST11/ST12) of a spur pinion (ST), and with the rear-mounted unit (NS) being linked to the output shaft (2) of the front-mounted unit (VS) via a second spur-gear stage (ST21/ST22) of the spur pinion (ST).

2. A multistep reduction gear according to claim 1, with both spur-gear stages (ST11/ST12, ST21/ST22) of the spur pinion (ST) featuring a ratio of transmission of one.

3. A multistep reduction gear according to claim 1, with both spur-gear stages (ST11/ST12, ST21/ST22) of the spur pinion (ST) featuring a ratio of transmission below or above one.

4. A multistep reduction gear according to one or several of the claims from 1 through 3, with each of the two spur-gear stages (ST11/ST12, ST21/ST22) of the spur pinion (ST) featuring driving and driven axles that are not arranged parallel to the axis.

5. A multistep reduction gear according to one or several of the claims from 1 through 4, with each of the two spur-gear stages (ST11/ST12, ST21/ST22) of the spur pinion (ST) being composed of a spur-gear pair (ST11 and ST12 or ST21 and ST22).

6. A multistep reduction gear according to one or several of the claims from 1 through 4, with each of the two spur-gear stages (ST11/ST12, ST21/ST22) of the spur pinion (ST) featuring more than two spur gears.

7. A multistep reduction gear according to one or several of the claims from 1 through 4, with the spur-gear stages (ST11/ST12, ST21/ST22) of the spur pinion (ST) featuring a different number of spur gears.

8. A multistep reduction gear according to one or several of the claims from 1 through 7, with the spur pinion (ST) being arranged axially between the front-mounted unit (VS) and the rear-mounted unit (NS), with front-mounted and rear-mounted units (VS, NS) featuring an offset central axis.

9. A multistep reduction gear according to one or several of the claims from 1 through 7, with the front-mounted unit (VS) and the rear-mounted unit (NS) being arranged largely on one level on a parallel axis, and with the spur pinion (ST) being arranged axially alongside the front-mounted and rear-mounted units (VS, NS) on the side of the front-mounted and rear-mounted units (VS, NS) not facing the driving engine of the multistep reduction gear.

10. A multistep reduction gear which comprises a drive shaft (1) which is connected to a front-mounted unit (VS) and an output shaft (3) which is arranged non-coaxially in relation to the drive shaft (1) and is connected to a rear-mounted unit (NS), and which is provided with control elements (A, B, D) acting on the front-mounted unit (VS) and with control elements (M, H, L) acting on the rear-mounted unit (NS), with selective activation of the control elements (A, B, D, M, H, L) permitting an input speed (n) of the drive shaft (1) to be transmitted to the output shaft (3) for the shifting of at least seven forward speeds in such a way that during upshifts to the next higher gear or downshifts to the next lower gear in each case only one of the control elements activated is deactivated while another control element is activated, with the front-mounted unit (VS) featuring an output shaft (2) rotating precisely at an output speed (nvs) of the front-mounted unit (VS), and with the rear-mounted unit (NS) being capable of being linked to the drive shaft (1) via at least one second control element (M, H) acting on the rear-mounted unit (NS) via a first bevel-gear set (KT11/KT12) of a bevel-gear stage (KT), and with the rear-mounted unit (NS) being linked to the output shaft (2) of the front-mounted unit (VS) via a second bevel-gear pair (KT21/KT22) of the bevel-gear stage (KT).

11. A multistep reduction gear according to claim 10, with the bevel-gear drive (KT) being designed as a hypoid bevel gear with an axle offset of the first bevel-gear pair (KT11/KT21) or the second bevel-gear pair (KT21/KT22).

12. A multistep reduction gear according to claim 10 or 11, with the angle between driving and driven axle of the bevel-gear drive (KT) being ninety degrees.

13. A multistep reduction gear according to claim 10 or 11, with the angle between driving and driven axle of the bevel-gear drive (KT) being less or more than ninety degrees.

14. A multistep reduction gear according to one or several of the claims from 10 through 13, with the ratio of transmission of both bevel-gear pairs (KT11/KT21, KT21/KT22) of the bevel-gear drive (KT) being one.

15. A multistep reduction gear according to one or several of the claims from 10 through 13, with the ratio of transmission of both bevel-gear pairs (KT11/KT21, KT21/KT22) of the bevel-gear drive (KT) being lower or higher than one.

16. A multistep reduction gear according to one or several of the claims from 10 through 13, with the ratio of transmission of both bevel-gear pairs (KT11/KT21, KT21/KT22) of the bevel-gear drive (KT) being different.

17. A multistep reduction gear according to one or several of the claims from 10 through 16, with the bevel-gear drive (KT) being arranged axially alongside the front-mounted unit (VS) on the side of the front-mounted unit (VS) not facing the driving engine of the multistep reduction gear and with the front-mounted unit (VS) and the rear-mounted unit (NS) being arranged alongside each other largely without spatial overlap.

18. A multistep reduction gear according to one or several of the preceding claims, with the front-mounted unit (VS) featuring at least two coupled, non-shifting front-mounted planetary gear sets (VS1, VS2) and the rear-mounted unit (NS) featuring at least two coupled rear-mounted planetary gear sets (NS1, NS2), with at least one of the rear-mounted planetary gear sets (NS1, NS2) being shiftable.

19. A multistep reduction gear according to one or several of the claims from 1 through 17, with the front-mounted unit (VS) featuring at least two coupled front-mounted planetary gear sets (VS1, VS"), with at least one of the front-mounted planetary gear sets (VS1, VS2) being shiftable, with the rear-mounted unit (NS) featuring at least two coupled rear-mounted planetary gear sets (NS1, NS2), with at least one of the rear-mounted planetary gear sets (NS1, NS2) being shiftable, and with the output speed (nvs) of the front-mounted unit (VS) being generated through selective closing of control elements (A, B, D) acting on the front-mounted unit (VS).

20. A multistep reduction gear according to claim 18 or 19, with the output shaft (2) of the front-mounted unit (VS) being linked to a central gear of the second rear-mounted planetary gear set (NS2) via the second spur-gear stage (ST21/ST22) of the spur-gear stage (ST) or the second bevel-gear pair (KT21/KT22) of the bevel-gear stage (KT).

21. A multistep reduction gear according to claim 18, 19 or 20, with the multistep reduction gear featuring two front-mounted planetary gear sets (VS1, VS2), two rear-mounted planetary gear sets (NS1, NS2) and a total of six control elements (A, B, D, M, H, L) and with a total of nine forward speeds being shiftable.

22. A multistep reduction gear according to claims 19, 20 and 21, with
- the front-mounted unit (VS) comprising three control elements (A, B, D) and two coupled, shiftable front-mounted planetary gear sets (VS1, VS2), each with one sun gear (11, 21), one ring gear (13, 23) and one spider (15, 25) with planetary gears (12, 22);
- the rear-mounted unit (NS) comprising three control elements (H, M, L) and two coupled, shiftable rear-mounted planetary gear sets (NS1, NS2), each with one sun gear (31, 41), one ring gear (33, 43) and one spider (35, 45) with planetary gears (32, 42);
- the spur-gear or bevel-gear drive (ST or KT) comprising a first spur-gear stage (ST11/ST12) or a first bevel-gear pair (KT11/KT12) with an input-end spur or bevel gear (ST11 or KT11) and an output-end spur or bevel gear (ST12 or KT12) as well as a second spur-gear stage (ST21/ST22) or a second bevel-gear pair (KT21/KT22) with an input-end spur or bevel gear (ST21 or KT21) and an output-end spur or bevel gear (ST22 or KT22);
- the sun gear (11) of the first front-mounted planetary gear set (VS1) being lockable via the first control element (A) of the front-mounted unit (VS);
- the sun gear (21) of the second front-mounted planetary gear set (VS2) being linked to the drive shaft (1);
- the ring gear (13) of the first front-mounted planetary gear set (VS1) and the spider (25) of the second front-mounted planetary gear set (VS2) being linked to each other and lockable via the third control element (D) of the front-mounted unit (VS);
- the ring gear (23) of the second front-mounted planetary gear set (VS2) and the spider (15) of the first front-mounted planetary gear set (VS1) being linked to each other and to the output shaft (2) of the front-mounted unit (VS) and also lockable via the second control element (B) of the front-mounted unit (VS);
- the drive shaft (1) being linked to the input-end spur or bevel gear (ST11 or KT11) of the first spur-gear stage (ST11/ST12) or of the first bevel-gear pair (KT11/KT12);
- the output shaft (2) of the front-mounted unit (VS) being linked to the input-end spur or bevel gear (ST21 or KT21) of the second spur-gear stage (ST21/ST22) or the second bevel-gear pair (KT21/KT22);
- the sun gear (31) of the first rear-mounted planetary gear set ((NS1) being capable of being linked via the first control element (M) of the rear-mounted unit (NS) to the output-end spur or bevel gear (ST12 or KT12) of the first spur-gear stage (ST11/ST12) or the first bevel-gear pair (KT11/KT12);
- the sun gear (41) of the second rear-mounted planetary gear set (NS2) being linked to the output-end spur or bevel gear (ST22 or KT22) of the second spur-gear stage (ST21/ST22) or the second bevel-gear pair (KT21/KT22);
- the ring gear (33) of the first rear-mounted planetary gear set (NS1) and the spider (45) of the second rear-mounted planetary gear set (NS2) being linked to each other, and being capable of being linked via the second control element (H) of the rear-mounted unit (NS) to the output-end spur or bevel gear (ST12 or KT12) of the first spur-gear stage (ST11/ST12) or the first bevel-gear pair (KT11/KT12), and also lockable via the third control element (L) of the rear-mounted unit (NS); and
- the ring gear (43) of the second rear-mounted planetary gear set (NS2) and the spider (35) of the first rear-mounted planetary gear set (NS1) being linked to each other and to the output shaft (3).

## Revendications

1. Boîte de vitesses à plusieurs rapports, dotée d'un arbre d'entrée (1) étant lié à un train d'engrenages monté en amont (VS), d'un arbre de sortie (3) n'étant pas disposé de façon coaxiale par rapport à l'arbre d'entrée (1) et étant lié à un train d'engrenages monté en aval (NS), d'éléments de commande (A, B, D) agissant sur le train d'engrenages monté en amont (VS) et d'éléments de commande (M, H, L) agissant sur le train d'engrenages monté en aval (NS), sachant que grâce à l'activation sélective des éléments de commande (A, B, D, M, H, L) il est possible de transmettre un régime d'entrée (n) de l'arbre d'entrée (1), pour l'engagement d'au moins sept rapports avant, de telle façon sur l'arbre de sortie (3) que pendant les passages montants à partir d'un rapport donné et au rapport immédiatement supérieur ou pendant les passages descendants à partir d'un rapport donné et au rapport immédiatement inférieur, dans tous les cas un des éléments de commande activés est désactivé tandis qu'un autre élément de commande est activé, et sachant que le train d'engrenages monté en amont (VS) comporte exactement un arbre de sortie (2) tournant au régime de sortie (nvs) du train d'engrenages monté en amont (VS), sachant que le train d'engrenages monté en aval (NS) peut être couplé à l'arbre d'entrée (1) à l'aide d'au moins un deuxième élément de commande (M, H) agissant sur le train d'engrenages monté en aval (NS) par l'intermédiaire d'un premier étage à pignons cylindriques (ST11/ST12) d'un couple cylindrique (ST), et sachant que le train d'engrenages monté en aval (NS) est lié à l'arbre de sortie (2) du train d'engrenages monté en amont (VS) par l'intermédiaire d'un deuxième étage à pignons cylindriques (ST21/ST22) du couple cylindrique (ST).

2. Boîte de vitesses à plusieurs rapports selon la revendication 1, sachant que les deux étages à pignons cylindriques (ST11/ST12, ST21/ST22) du couple cylindrique (ST) ont un rapport de démultiplication de un.

3. Boîte de vitesses à plusieurs rapports selon la revendication 1, sachant que les deux étages à pignons cylindriques (ST11/ST12, ST21/ST22) du couple cylindrique (ST) ont un rapport de démultiplication inférieur ou supérieur à un.

4. Boîte de vitesses à plusieurs rapports selon une ou plusieurs des revendications 1 à 3, sachant que chacun des étages à pignons cylindriques (ST11/ST12, ST21/ST22) du couple cylindrique (ST) comporte des essieux menants et menés non parallèles à l'axe.

5. Boîte de vitesses à plusieurs rapports selon un ou plusieurs des revendications 1 à 4, sachant que les étages à pignons cylindriques (ST11/ST12, ST21/ST22) du couple cylindrique (ST) sont formés respectivement d'un étage de pignons cylindriques (ST11 et ST12 ou ST21 et ST22).

6. Boîte de vitesses à plusieurs rapports selon un ou plusieurs des revendications 1 à 4, sachant que chacun des étages à pignons cylindriques (ST11/ST12, ST21/ST22) du couple cylindrique (ST) comporte plus de deux pignons cylindriques.

7. Boîte de vitesses à plusieurs rapports selon un ou plusieurs des revendications 1 à 4, sachant que les étages à pignons cylindriques (ST11/ST12, ST21/ST22) du couple cylindrique (ST) comportent un nombre différent de pignons cylindriques.

8. Boîte de vitesses à plusieurs rapports selon un ou plusieurs des revendications 1 à 7, sachant que le couple cylindrique (ST) est disposé de façon axiale entre le train d'engrenages monté en amont (VS) et le train d'engrenages monté en aval (NS), et sachant que le train d'engrenages monté en amont (VS) et le train d'engrenages monté en aval (NS) comportent l'un par rapport à l'autre un désaxage de l'axe central.

9. Boîte de vitesses à plusieurs rapports selon un ou plusieurs des revendications 1 à 7, sachant que le train d'engrenages monté en amont (VS) et le train d'engrenages monté en aval (NS) sont substantiellement disposés dans un plan et de façon parallèle à l'axe et que le couple cylindrique (ST) est disposé de façon axiale à côté du train d'engrenages monté en amont (VS) et du train d'engrenages monté en aval (NS) et du côté des trains d'engrenages montés en amont et en aval (VS, NS) opposé à un moteur d'entraînement de la boîte de vitesses à plusieurs étages.

10. Boîte de vitesses à plusieurs rapports, dotée d'un arbre d'entrée (1) étant lié à un train d'engrenages monté en amont (VS), d'un arbre de sortie (3) n'étant pas disposé de façon coaxiale par rapport à l'arbre d'entrée (1) et étant lié à un train d'engrenages monté en aval (NS), d'éléments de commande (A, B, D) agissant sur le train d'engrenages monté en amont (VS) et d'éléments de commande (M, H, L) agissant sur le train d'engrenages monté en aval (NS), sachant que grâce à l'activation sélective des éléments de commande (A, B, D, M, H, L) il est possible de transmettre un régime d'entrée (n) de l'arbre d'entrée (1), pour l'engagement d'au moins sept rapports avant, de telle façon sur l'arbre de sortie (3) que pendant les passages montants à partir d'un rapport donné et au rapport immédiatement supérieur ou pendant les passages descendants à partir d'un rapport donné et au rapport immédiatement inférieur, dans tous les cas un des éléments de commande activés est désactivé tandis qu'un autre élément de commande est activé, et sachant que le train d'engrenages monté en amont (VS) comporte exactement un arbre de sortie (2) tournant au régime de sortie (nvs) du train d'engrenages monté en amont (VS), sachant que le train d'engrenages monté en aval (NS) peut être couplé à l'arbre d'entrée (1) à l'aide d'au moins un deuxième élément de commande (M, H) agissant sur le train d'engrenages monté en aval (NS) par l'intermédiaire d'un premier couple conique (KT11/KT12) d'un étage à pignons coniques (KT), et sachant que le train d'engrenages monté en aval (NS) est lié à l'arbre de sortie (2) du train d'engrenages monté en amont (VS) par l'intermédiaire d'un deuxième couple conique (KT21/KT22) de l'étage à pignons coniques (KT).

11. Boîte de vitesses à plusieurs rapports selon la revendication 10, sachant que le train d'engrenages coniques (KT) est réalisé sous forme hypoïde avec un désaxage du premier couple conique (KT11/KT12) ou du deuxième couple conique (KT21/KT22).

12. Boîte de vitesses à plusieurs rapports selon les revendications 10 ou 11, sachant que l'angle entre l'essieu menant et l'essieu mené de l'étage à pignons coniques (KT) est de 90°.

13. Boîte de vitesses à plusieurs rapports selon les revendications 10 ou 11, sachant que l'angle entre l'essieu menant et l'essieu mené de l'étage à pignons coniques (KT) est inférieur ou supérieur à 90°.

14. Boîte de vitesses à plusieurs rapports selon un ou plusieurs des revendications 10 à 13, sachant que le rapport de démultiplication des deux couples coniques (KT11/KT12, KT21/KT22) du train à engrenages coniques (KT) est un.

15. Boîte de vitesses à plusieurs rapports selon un ou plusieurs des revendications 10 à 13, sachant que le rapport de démultiplication des deux couples coniques (KT11/KT12, KT21/KT22) du train à engrenages coniques (KT) est inférieur ou supérieur à un.

16. Boîte de vitesses à plusieurs rapports selon un ou plusieurs des revendications 10 à 13, sachant que le rapport de démultiplication des deux couples coniques (KT11/KT12, KT21/KT22) du train à engrenages coniques (KT) est différent.

17. Boîte de vitesses à plusieurs rapports selon un ou plusieurs des revendications 10 à 16, sachant que le train à pignons coniques (KT) est disposé de façon axiale à côté du train d'engrenages monté en amont (VS) et du côté du train d'engrenages monté en amont (VS) opposé à un moteur d'entraînement de la boîte de vitesses à plusieurs étages, et sachant que le train d'engrenages monté en amont (VS) et le train d'engrenages monté en aval (NS) sont disposés l'un à côté de l'autre et substantiellement sans recouvrement dans l'espace.

18. Boîte de vitesses à plusieurs rapports selon une ou plusieurs des revendications précédentes, sachant que le train d'engrenages monté en amont (VS) comporte au moins deux trains épicycloïdaux couplés, montés en amont et non couplables (VS1, VS2), et sachant que le train d'engrenages monté en aval (NS) comporte au moins deux trains épicycloïdaux couplés et montés en aval (NS1, NS2), sachant qu'au moins un des trains épicycloïdaux montés en aval (NS1, NS2) est couplable.

19. Boîte de vitesses à plusieurs rapports selon une ou plusieurs des revendications 1 à 17, sachant que le train d'engrenages monté en amont (VS) comporte au moins deux trains épicycloïdaux montés en amont et couplés (VS1, VS2), sachant qu'au moins un des trains épicycloïdaux montés en amont (VS1, VS2) est couplable, sachant que le train d'engrenages monté en aval (NS) comporte au moins deux trains épicycloïdaux montés en aval et couplés (NS1, NS2), sachant que au moins un des trains épicycloïdaux montés en aval et couplés (NS1, NS2) est couplable, et sachant que le régime de sortie (nvs) du train d'engrenages monté en amont (VS) est formé par la fermeture sélective d'éléments de commande (A, B, D) agissant sur le train d'engrenages monté en amont (VS).

20. Boîte de vitesses à plusieurs rapports selon les revendications 18 ou 19, sachant que l'arbre de sortie (2) du train d'engrenages monté en amont (VS) est lié par l'intermédiaire du deuxième étage à pignons cylindriques (ST21/ST22) du train à pignons cylindriques (ST) ou le deuxième couple conique (KT21/KT22) de l'étage à pignons coniques (KT) à un pignon central du deuxième train épicycloïdal monté en aval (NS2).

21. Boîte de vitesses à plusieurs rapports selon les revendications 18, 19 ou 20, sachant que la boîte de vitesses à plusieurs rapports comporte deux trains épicycloïdaux montés en amont (VS1, VS2), deux trains épicycloïdaux montés en aval (NS1, NS2) et au total six éléments de commande (A, B, D, M, H, L) et qu'il est possible d'engager au total neuf rapports avant.

22. Boîte de vitesses à plusieurs rapports selon les revendications 19, 20 et 21, sachant que :
- le train d'engrenages monté en amont (VS) comporte trois éléments de commande (A, B, D) et deux trains épicycloïdaux montés en amont, couplés et couplables (VS1, VS2), dont chacun est doté d'un pignon planétaire (11, 21), d'une couronne (13, 23) et d'une nervure (15, 25) avec des satellites (12, 22) ;
- le train d'engrenages monté en aval (NS) comporte trois éléments de commande (H, M, L) et deux trains épicycloïdaux montés en aval, couplés et couplables (NS1, NS2), dont chacun est doté d'un pignon planétaire (31, 41), d'une couronne (33, 43) et d'une nervure (35, 45) avec des satellites (32, 42) ;
- le couple cylindrique ou le couple conique (ST ou KT) comportent un premier étage à pignons cylindriques (ST11/ST12) ou un premier étage à pignons coniques (KT11/KT12) avec un pignon cylindrique ou pignon conique (ST11 ou KT11) côté entrée et un pignon cylindrique ou un pignon conique (ST12 ou KT12) côté sortie, ainsi qu'un deuxième étage à pignons cylindriques (ST21/ST22) ou un deuxième étage à pignons coniques (KT21 / KT22) avec un pignon cylindrique ou pignon conique (ST21 ou KT21) côté entrée et pignon cylindrique ou un pignon conique (ST22 ou KT22) côté sortie ; - le pignon planétaire (11) du premier train épicycloïdal monté en amont (VS1) peut être fixé par l'intermédiaire du premier élément de commande (A) du train d'engrenages monté en amont (VS) ; - le pignon planétaire (21) du deuxième train épicycloïdal monté en amont (VS2) est lié à l'arbre d'entrée (1); - la couronne (13) du premier train épicycloïdal monté en amont (VS1) et la nervure (25) du deuxième train épicycloïdal monté en amont (VS2) sont liés l'un à l'autre et peuvent être fixés par l'intermédiaire du troisième élément de commande (D) du train d'engrenages monté en amont (VS) ;
- la couronne (23) du deuxième train épicycloïdal monté en amont (VS2) et la nervure (15) du premier train épicycloïdal monté en amont (VS1) sont liés l'un à l'autre et à l'arbre de sortie (2) du train d'engrenages monté en amont (VS) et peuvent être fixés par l'intermédiaire du deuxième élément de commande (B) de la couronne (13) du premier train épicycloïdal monté en amont (VS1) et la nervure (25) du deuxième train épicycloïdal monté en amont (VS2) sont liés l'un à l'autre et peuvent être fixés par l'intermédiaire du troisième élément de commande (D) du train d'engrenages monté en amont (VS) ;
- l'arbre d'entrée (1) est lié au pignon cylindrique ou pignon conique côté entrée (ST11 ou KT11) du premier étage à pignons cylindriques (ST11/ST12) ou du premier couple conique (KT11/KT12) ;
- l'arbre de sortie (2) du train d'engrenages monté en amont (VS) est lié au pignon cylindrique ou pignon conique côté entrée (ST21 ou KT21) du deuxième étage à pignons cylindriques (ST21/ST22) ou du deuxième couple conique (KT21/KT22) ; le pignon planétaire (31) du premier train épicycloïdal monté en aval (NS1) peut être couplé par l'intermédiaire du premier élément de commande (M) du train d'engrenages monté en aval (NS) au pignon cylindrique ou pignon conique côté sortie (ST12 ou KT12) du premier étage à pignons cylindriques (ST11/ST12) ou du premier couple conique (KT11/KT12) ;
- le pignon planétaire (41) du deuxième train épicycloïdal monté en aval (NS2) peut être couplé au pignon cylindrique ou pignon conique côté sortie (ST22 ou KT22) du deuxième étage à pignons cylindriques (ST21/ST22) ou du deuxième couple conique (KT21/KT22) ;
- la couronne (33) du premier train épicycloïdal monté en aval (NS1) et la nervure (45) du deuxième train épicycloïdal monté en aval (NS2) sont liés l'un à l'autre, peuvent être couplés par l'intermédiaire du deuxième élément de commande (H) du train d'engrenages monté en aval (NS) au pignon cylindrique ou pignon conique côté sortie (ST12 ou KT12) du premier étage à pignons cylindriques (ST11/ST12) ou du premier couple conique (KT11/KT12) et peuvent être fixés par l'intermédiaire du troisième élément de commande (L) du train d'engrenages monté en aval (NS); et
- la couronne (43) du deuxième train épicycloïdal monté en aval (NS2) et la nervure (35) du premier train épicycloïdal monté en aval (NS1) sont liés l'un à l'autre et à l'arbre de sortie (3).
